# EUROPEAN PATENT SPECIFICATION

(11) **EP 2 700 797 B1**
(45) Date of publication and mention of the grant of the patent: **17.12.2014**
(21) Application number: 13171605.2
(22) Date of filing: 12.06.2013
(51) Int. Cl.: F01N 3/20, F02B 37/24, F02D 41/02, F01N 3/023

(54) **Method for controlling internal-combustion engine**
Verfahren zur Steuerung eines Verbrennungsmotors
Procédé pour contrôler un moteur à combustion interne

(30) Priority: 24.08.2012 JP 2012185217
(43) Date of publication of application: 26.02.2014
(73) Proprietor: Kabushiki Kaisha Toyota Jidoshokki, Kariya-shi, Aichi 448-8671 (JP); Toyota Jidosha Kabushiki Kaisha, Toyota-shi, Aichi 471-8571 (JP)
(72) Inventor: Hisamura, Miyuki, Kariya-shi, Aichi 448-8671 (JP); Amaike, Masaaki, Kariya-shi, Aichi 448-8671 (JP); Oikawa, Naohiko, Toyota-shi, Aichi 471-8571 (JP)
(74) Representative: TBK

(56) References cited:
- JP-A- 2007 303 345
- JP-A- 2010 169 021
- US-A- 4 685 302

## Description

This application claims priority to Japanese patent application serial number 2012-185217, the contents of which are incorporated herein by reference.

Embodiments of the present invention relate to a method for controlling an internal-combustion engine provided with a turbo supercharger having variable nozzles.

Recent internal-combustion engines, such as a diesel engine or the like, are provided with various exhaust gas purifying catalysts, filters, or the like, within an exhaust gas line. The exhaust gas purifying catalyst detoxifies specific constituents contained in the exhaust gas. The filter captures particles contained in the exhaust gas. In the internal-combustion engine provided with a turbo supercharger, the exhaust gas purifying catalysts, the filters, or the like are disposed downstream of the turbo supercharger.

In the internal-combustion engine, the exhaust gas purifying catalysts and the filters are warmed up by temporarily warming up the exhaust gas during operation of the engine in which fuel injection is not performed (e.g. during deceleration). Thus, the various exhaust gas-purifying catalysts are activated, or the purification capacity of the filters is restored by burning and removing the particles captured by the filters.

The internal-combustion engine may be provided with a turbo supercharger. The turbo supercharger may have a variable nozzle which can control exhaust gas flow rate. In the case of this internal-combustion engine, the variable nozzle is forced to a closing side, thereby reducing the exhaust gas passing through the turbo supercharger and increasing the back pressure of the internal-combustion engine. Thus, the amount of intake air is reduced and a temperature of the exhaust gas is raised.

Japanese Laid-Open Patent Publication No.2010-169021 discloses an exhaust gas purification system having an internal-combustion engine. The engine is provided with a turbo supercharger having variable nozzles. An exhaust gas purifying catalyst is provided in an exhaust gas line, and a fuel addition valve is provided upstream of the exhaust gas purifying catalyst. For regeneration of the purification capacity of the exhaust gas purifying catalyst, a high pressure and high temperature fuel is added to the exhaust gas line from the fuel addition valve. The exhaust gas is introduced to the fuel addition valve via the on-off valve in the exhaust gas line branching-off from an upstream side of a turbine of the turbo supercharger. When the high pressure and high temperature fuel is added from the fuel addition valve, the variable nozzle is forced to the closing side and the on-off valve is opened, and the high pressure and high temperature exhaust gas is introduced to the fuel addition valve.

Japanese Laid-Open Patent Publication 2007-303345 discloses an exhaust gas purification system having an internal-combustion engine. The engine is provided with a turbo supercharger having variable nozzles. An exhaust gas purification apparatus is provided in the exhaust gas line downstream of a turbine of the turbo supercharger. When a reductant is supplied to restore performance of the exhaust gas purification apparatus, the variable valve is forced to a closing side in order to raise the temperature of the exhaust gas, thereby facilitating atomization of the reductant.

In the related art, the variable nozzle is forced to the closing side in order to raise the temperature of the exhaust gas. For preventing mechanical damage or the like, on the closing side of the variable nozzle, a stopper is provided at a mechanical limit position in the closing direction. The mechanical limit position in the closing direction (bumping position) is the position where a member interlocking with the variable nozzle bumps into the stopper member. In the case of a relatively large impact when the member bumps into the stopper, abrasion, deformation, or the like in the member or the stopper may be caused. Thereby performance and effectiveness of the variable nozzle will be lowered in some situations. As a result, in the typical control method, the opening degree of the variable nozzle is controlled such that the member does not bump into the stopper even when a request for full closing of the variable nozzle is made.

For raising the temperature of the exhaust gas, moving the variable nozzle to the bumping position is effective. However, there may be a situation where the variable nozzle cannot be moved to the bumping position due to deviations in the position of the stopper, the operation state (ambient temperature of the turbo supercharger), detecting means or the like. Alternatively, deviations can occur in the degree of impact on the stopper and the member due to unevenness of the speed of the member at the bumping position.

Therefore, there has been a need for a control method which causes the variable nozzle to be moved to the bumping position and lessens impact at the bumping position.

Certain embodiments of the present invention include a method for controlling an internal-combustion engine. The engine may be provided with a turbo supercharger. The turbocharger may have a variable nozzle. The method may comprise steps described below. The first step is forcing the variable nozzle to a closing side by a controller or control means, so that an exhaust gas temperature of the internal-combustion engine is raised. The second step is decreasing a closing speed of the variable nozzle by the controller or control means, when an opening degree of the variable nozzle is less than or equal to a predetermined opening degree. In the step, the closing speed becomes lower than a closing speed of the variable nozzle during a period until the opening degree reaches the predetermined opening degree. The third step is moving the variable nozzle to a closing side until a mechanical limit position by the controller or control means.

Therefore, when the exhaust gas temperature raises and the variable nozzle is moved to the closing side, the opening degree of the variable nozzle may become less than or equal to the predetermined opening degree. In that case, the closing speed of the variable nozzle is decreased until the variable nozzle reaches the mechanical limit position. Thus, an impact occurring when the variable nozzle reaches the mechanical limit position is decreased. As a result, the variable nozzle may safely reach the mechanical limit position. Because the variable nozzle is moved to the mechanical limit position, the variable nozzle may be assuredly moved to the mechanical limit position.

In another aspect of an embodiment of the present invention, the variable nozzle may be opened and/or closed by a drive motor. A magnitude of current to the drive motor may be adjusted by the controller or control means. In the step, the closing speed of the variable nozzle from the predetermined opening degree to the mechanical limit position becomes a target speed. The target speed is less than the closing speed of the variable nozzle during a period until the opening degree reaches the predetermined opening degree. Thus, the closing speed of the variable nozzle may be preferably decreased.

In another aspect of an embodiment of the present invention, the variable nozzle may be opened and/or closed by a drive motor. A magnitude of current to the drive motor may be adjusted to a constant predetermined value by the controller or control means. In the step, the closing speed of the variable nozzle from the predetermined opening degree to the mechanical limit position becomes less than or equal to a target speed. The target speed is less than the closing speed of the variable nozzle during a period until the opening degree reaches the predetermined opening degree. Thus, the closing speed of the variable nozzle may be preferably decreased.

In another aspect of an embodiment of the present invention, the variable nozzle may be opened and/or closed by a drive motor. A current to the drive motor may be gradually decreased by the controller or control means. In the step, the closing speed of the variable nozzle may be gradually decreased during a period from the predetermined opening degree to the mechanical limit position. When the variable nozzle reaches the mechanical limit position, the closing speed of the variable nozzle becomes less than or equal to a target speed. The target speed is less than the closing speed during a period until the opening degree reaches the predetermined opening degree. Thus, the closing speed of the variable nozzle may be preferably decreased.

Additional objects, features, and advantages, of the present invention will be readily understood after reading the following detailed description together with the claims and the accompanying drawings, in which:
FIG. 1 is a schematic view of an internal combustion and an exhaust gas system adapted by a control method for the internal combustion provided with a turbo supercharger having variable nozzles of an embodiment of the present invention;
FIG. 2A is a view of a configuration for opening and closing the variable nozzles when the variable nozzles are located on an opening side;
FIG. 2B is a view of the configuration for opening and closing the variable nozzles when the variable nozzles are located on a closing side;
FIG. 3 is a flow chart of a procedure for bumping the variable nozzle to a bumping position;
FIG. 4A is a graph of variable nozzle opening degree with respect to time in a case that a closing speed of the variable nozzle is a target speed V2 when the variable nozzle reaches the bumping position;
FIG. 4B is a graph of closing speed of the variable nozzle with respect to time in the case that the closing speed of the variable nozzle is the target speed V2 when the variable nozzle reaches the bumping position;
FIG. 4C is a graph of electric current or duty with respect to time in the case that the closing speed of the variable nozzle is the target speed V2 when the variable nozzle reaches the bumping position;
FIG. 5A is a graph of variable nozzle opening degree with respect to time in a case that an electric current supplied to a drive motor is a current I1 so that the closing speed is equal to or lower than the target speed V2 when the variable nozzle reaches the bumping position;
FIG. 5B is a graph of closing speed of the variable nozzle with respect to time in the case that the electric current supplied to the drive motor is the current I1 so that the closing speed is equal to or lower than the target speed V2 when the variable nozzle reaches the bumping position;
FIG. 5C is a graph of electric current supplied to the drive motor with respect to time in the case that the electric current supplied to the drive motor is the current I1 so that the closing speed is equal to or lower than the target speed V2 when the variable nozzle reaches the bumping position;
FIG. 6A is a graph of variable nozzle opening degree with respect to time in a case that the electric current supplied to the drive motor is gradually decreased so that the closing speed is equal to or lower than the target speed V2 when the variable nozzle reaches the bumping position;
FIG. 6B is a graph of closing speed of the variable nozzle with respect to time in a case that the electric current supplied to the drive motor is gradually decreased so that the closing speed is equal to or lower than the target speed V2 when the variable nozzle reaches the bumping position; and
FIG. 6C is a graph of electric current of the drive motor with respect to time in a case that the electric current supplied to the drive motor is gradually decreased so that the closing speed is equal to or lower than the target speed V2 when the variable nozzle reaches the bumping position.

Each of the additional features and teachings disclosed above and below may be utilized separately or in conjunction with other features and teachings to provide improved methods for controlling an internal-combustion engine provided with a turbo supercharger having variable nozzles. Representative examples of the present invention, which utilize many of these additional features and teachings both separately and in conjunction with one another, will now be described in detail with reference to the attached drawings. This detailed description is merely intended to teach a person of ordinary skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful configurations of the present teachings.

Hereinafter, an embodiment of the present invention will be illustrated with the accompanying drawings.

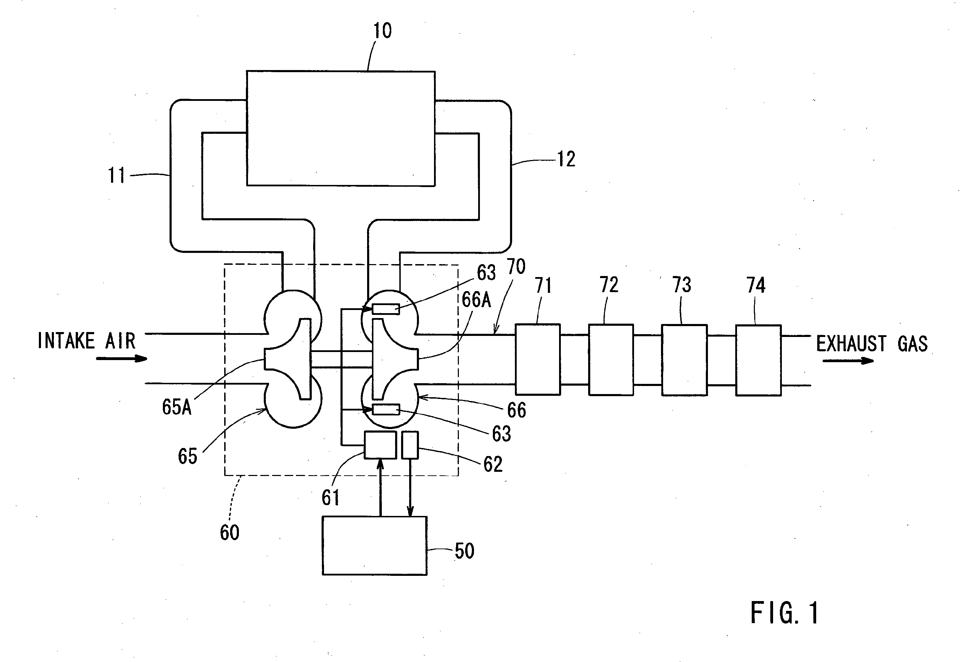

As shown in FIG. 1, the internal-combustion engine is an engine 10 (e.g. diesel engine) to be controlled. An intake pipe 11 is connected to one end of the engine 10, and an exhaust pipe 12 is connected to other end of the engine 10. A compressor 65 of a turbo supercharger 60 is connected to a leading end of the intake pipe 11. The intake pipe 11 introduces intake air supercharged by a compressor impeller 65A into the engine 10.

A turbine 66 of the turbo supercharger 60 is connected to a leading end of the exhaust pipe 12. The exhaust pipe 12 introduces exhaust gas discharged from the engine 10 into the turbine 66. The exhaust gas is introduced into the turbine 66 to rotate a turbine impeller 66A and discharged to an exhaust gas line 70. The turbine 66 is provided with variable nozzles 63, a drive motor 61 and an opening degree detecting means 62.

A control means (controller) 50 detects an operation state of the engine 10 and calculates a target opening degree of the variable nozzle 63 in accordance with an operation state. The control means 50 controls the drive motor 61 based on a detection signal from the opening degree detecting means 62 to achieve the target opening degree. The opening degree of the variable nozzle 63 is adjusted by the drive motor 61. When numbers of the engine rotations is low and exhaust flow rate is small, for example, the control means 50 controls the variable nozzle 63 to a closing side. Thus the turbine impeller 66A may be efficiently rotated even if the exhaust flow rates are low.

A first catalyst 71, a filter 72, a second catalyst 73 and a third catalyst 74, which are used to purify the exhaust gas, are sequentially connected to the exhaust gas line 70. For example, the first catalyst 71 is an oxidation catalyst which detoxifies hydrocarbon (HC) and carbon monoxide (CO). The filter 72 is a so-called DPF (Diesel Particulate Filter) which captures particulates contained in the exhaust gas. The second catalyst 73 is a so-called SCR catalyst which detoxifies nitrogen oxide (NOx). The third catalyst 74 is an oxidation catalyst which detoxifies leftover ammonia not used in a reaction of the SCR catalyst.

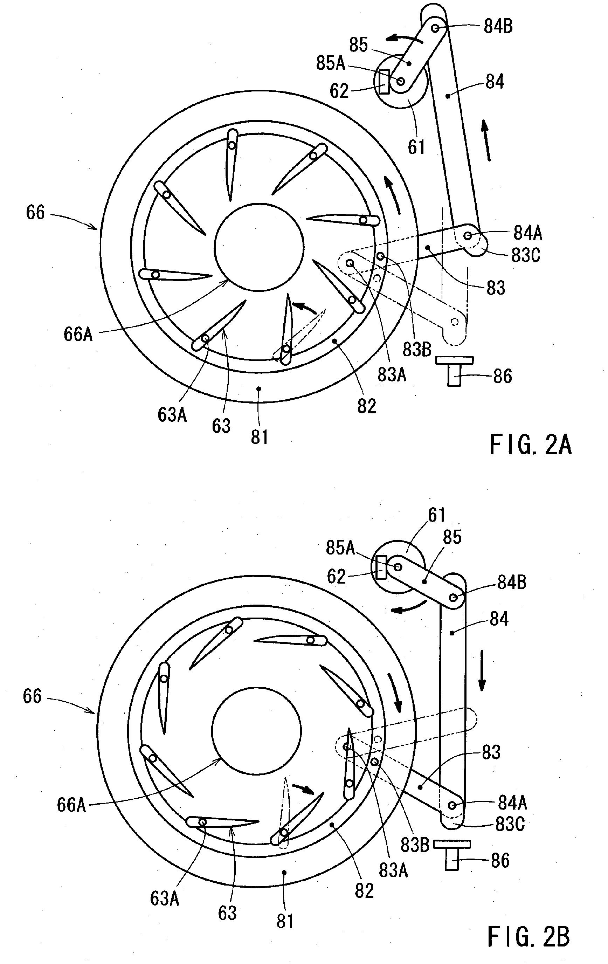

A structure for opening and closing the variable nozzles 63 and a bumping position (a limit position at a closing side) of the variable nozzles 63 will be described in reference to FIGS. 2A and 2B. A plurality of the variable nozzles 63 is disposed so as to surround an outer circumference of the turbine impeller 66A. The variable nozzles 63 are rotatable around a rotation shaft 63A. Each of the rotation shafts 63A is mounted on a base 81. An annular member 82 is rotatably mounted on the base 81.

As shown in FIG. 2A, when the annular member 82 is rotated in a counterclockwise direction, each of the variable nozzles 63 is rotated to the opening side. As shown in FIG. 2B, when the annular member 82 is rotated in a clockwise direction, each of the variable nozzles 63 is rotated to the closing side.

The drive motor 61 can rotate a main arm 83 via a first arm 85 and a second arm 84. One end 85A of the first arm 85 is connected to a drive shaft of the drive motor 61, and the other end of the first arm 85 is rotatably connected to one end of the second arm 84. The other end of the second arm 84 is rotatably connected to one end of the main arm 83, and the other end of the main arm 83 is rotatably connected to the base 81. The main arm 83 is rotatable around a rotation shaft 83A mounted on the base 81. A center portion of the main arm 83 is rotatably connected to the annular member 82 by a coupling member 83B.

When the drive motor 61 rotates the first arm 85 in a counterclockwise direction, the annular member 82 is rotated in a counterclockwise direction via the second arm 84 and the main arm 83. Thus, each of the variable nozzles 63 is rotated to the opening side (see FIG. 2A). When the drive motor 61 rotates the first arm 85 in a clockwise direction, the annular member 82 is rotated in a clockwise direction via the second arm 84 and the main arm 83. Thus, each of the variable nozzles 63 is rotated to the closing side (see FIG. 2B).

A stopper 86 is provided at a mechanical limit position in a closing direction of the variable nozzle 63. An end portion 83C of the main arm 83 bumps into the stopper 86, thus the variable nozzle 63 cannot be rotated to the closing side any more. Therefore, the variable nozzle 63 is positioned at the bumping position.

A position where the main arm 83 bumps into the stopper 86 is the limit position where the variable nozzle 63 is mechanically movable. If the main arm 83 bumps into the stopper 86 at a relatively fast closing speed, the resulting impact causes abrasion, deformation or the like in the stopper 86 and main arm 83. Therefore, it is not preferable that the main arm 83 bumps into stopper 86 at a fast closing speed.

In the conventional control method, a position slightly before the position where the main arm 83 bumps into the stopper 86 is set as a controlled fully closed position. When the request for full closing of the variable nozzle 63 is made, the variable nozzle is controlled to the controlled fully closed position instead of the mechanical limit position. Thus, the main arm 83 is controlled not to bump into the stopper 86.

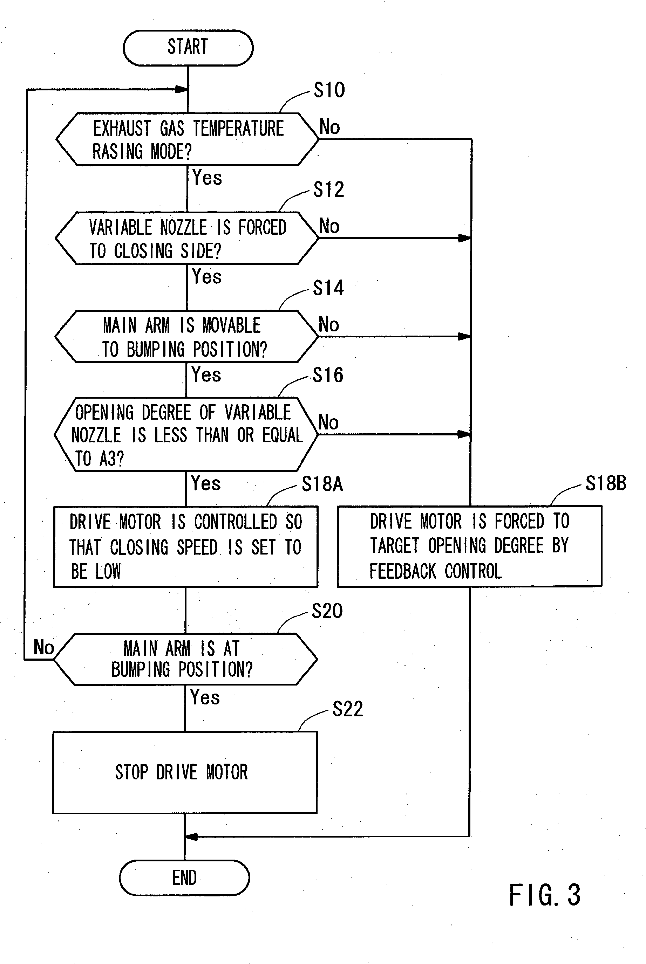

A control procedure of the drive motor 61 by the control means 50 will be illustrated using a flowchart shown in FIG. 3. The control means 50 performs the processes of the flowchart in FIG. 3 at a predetermined timing (for example, every few milliseconds or several tens of milliseconds). Therefore, the drive motor 61 adjusting the opening degree of the variable nozzle 63 is controlled.

In Step S10, the control means 50 determines whether or not an exhaust gas temperature-raising mode, which raises the exhaust gas temperature of the engine 10, is started. The control means 50 can detect the operation state of the engine 10 with various sensors or the like (not shown) connected thereto. The control means 50 determines whether or not a condition in which the exhaust gas temperature is raised is satisfied based on the present operation state of the engine 10. When determining that the condition in which the exhaust gas temperature is raised is satisfied (Yes), the process proceeds to Step S12. When determining that the condition in which the exhaust gas temperature is raised is not satisfied (No), the process proceeds to Step S18B.

If the process proceeds to Step S12, the control means 50 determines whether or not the variable nozzle 63 is on the closing side. When determining that the variable nozzle 63 is on the closing side (Yes), the process proceeds to Step S14. When determining that it is not on the closing side (i.e., it is on the opening side or the like) (No), the process proceeds to Step S18B.

If the process proceeds to Step S14, the control means 50 controls the drive motor 61 to the closing side based on the operation state of the engine 10, and determines whether or not the main arm 83 is movable to the bumping position where the main arm 83 bumps into the stopper 86 (see FIG. 2B). At this time, the control means 50 uses a map different from a map for adjusting the opening degree of the variable nozzle 63 which is used in a typical engine control method. When determining that the main arm 83 is movable to the bumping position (Yes), the process proceeds to Step S16. When determining that the main arm is not movable to the bumping position (No), the process proceeds to Step S18B.

If the process proceeds to Step S16, the control means 50 determines whether or not the opening degree of the variable nozzle 63 is less than or equal to a predetermined opening degree A3. The control means 50 can detect the present opening degree of the variable nozzle 63 based on a detection signal from the opening degree detecting means 62. When determining that the opening degree of the variable nozzle 63 is less than or equal to the predetermined opening degree A3 (Yes), the process proceeds to Step S18A. When determining that it is not less than or equal to the predetermined opening degree A3 (No), the process proceeds to Step S18B.

In the control method according to this embodiment, a closing speed of the main arm 83 is set to low for achieving small and stable impact without unevenness when the main arm 83 bumps into the stopper 86. However, if the closing speed is set to low regardless of the opening degree of the variable nozzle 63, the time for closing to the target opening degree becomes longer than that of the conventional method, thus transient response is degraded. Therefore, the above-mentioned control method is not preferable. Hence the conventional feedback control process in Step S18B is used until just before the main arm 83 bumps into the stopper 86 to secure transient response, while the closing speed of the main arm 83 is set to lower at a position immediately before the bumping position.

A threshold in Step S16 (the predetermined opening degree A3) is set to an appropriate value in consideration of individual differences of the turbo supercharger or the like. For example, the threshold is set to an opening degree of 5%.

If the process proceeds to Step S18B, the control means 50 adjusts duty or current of the drive motor 61 based on deviation between the target opening degree of the variable nozzle 63 and the present opening degree of the variable nozzle 63 and terminates the process. The present opening degree of the variable nozzle 63 is obtained from the detection signal from the opening degree detecting means 62. Duty indicates a proportion of turn-on time with respect to PWM cycle in PWM control. The conventional feedback control process is used at the process in Step S18B. For instance, the control focusing on transient response is performed and thus the speed is altered in accordance with deviation between the present opening degree of the variable nozzle 63 and the target opening degree. Since the current to the drive motor 61 is adjusted by adjusting duty, adjusting duty or current is as same as adjusting current.

If the process proceeds to Step S18A, the control means 50 adjusts duty or current to the drive motor 61 such that the closing speed is lower than a closing speed in the case where the opening degree of the variable nozzle 63 is larger than the predetermined opening degree (threshold in Step S16). Therefore, the variable nozzle 63 is moved to the closing side at lower closing speed.

If the process proceeds to Step S20, the control means 50 moves the drive motor 61 to the closing side to determine whether or not the main arm 83 is at the bumping position where the main arm 83 bumps into the stopper 86 (see FIG. 2B). When, for example, variation in the opening degree of the variable nozzle 63, in accordance with the detection signal from the opening degree detecting means 62, is less than or equal to a predetermined amount even after the drive motor 61 is continuously moved to the closing side for a predetermined time, it is determined that the main arm 83 reaches the bumping position. When determining that the main arm 83 reaches the bumping position (Yes), the process proceeds to Step S22 and the control means 50 stops driving of the drive motor 61. Therefore, a state in which the main arm 83 bumps into the stopper 86 is maintained and the process is terminated. When determining that the main arm 83 does not reach the bumping position (No), the process returns to Step S10 to be repeated.

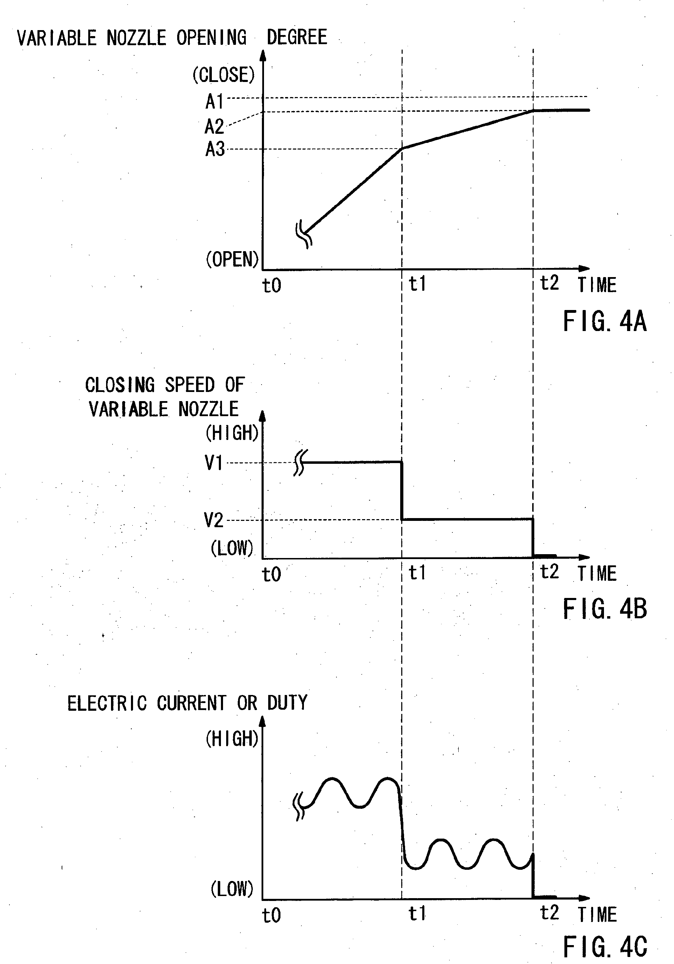

In the process of Step S18A, it is desirable that the variable nozzle 63 is driven to the bumping position. To this end, it is preferable that the target opening degree of the variable nozzle 63 is virtually set to a virtually full-closed target opening degree A1 shown in FIGS. 4A, 5A and 6A. The virtually full-closed target opening degree A1 is a position nearer to the closing side than the actual bumping position A2. By setting to the virtually full-closed target opening degree A1, it is possible to assuredly close the variable nozzle 63 to the bumping position without influence from the individual differences of the turbo supercharger (deviated positions of the stopper 86).

A method for adjusting duty or current to the drive motor 61, for decreasing the closing speed, will be illustrated in detail with three examples. In a first example the closing speed is maintained constant. In a second example the current to the drive motor 61 is maintained constant. In a last example, the current to the drive motor 61 is gradually decreased.

The first example, in which the closing speed is maintained constant, will be described in reference to FIGS. 4A to 4C. FIG. 4C shows a magnitude of current with respect to time in the case where duty or current to the drive motor 61 (i.e. current) is adjusted such that the closing speed of the variable nozzle 63 becomes a constant target speed in Step S18A of FIG. 3.

FIG. 4A shows the opening degree of the variable nozzle 63 with respect to time. FIG. 4B shows the closing speed of the variable nozzle 63, which maintains constant at the points of V1 or V2, with respect to time. FIG. 4C shows a magnitude of output of duty or current to the drive motor 61 from the control means 50 with respect to time.

In FIG 4A, A3 indicates the predetermined opening degree (e.g. the opening degree of 5%) of the variable nozzle 63 in Step S16 of FIG. 3. A2 indicates the bumping position (the position where the main arm 83 bumps into the stopper 86). A1 indicates the virtually full-closed target opening degree which is virtually set to a position nearer to the closing side than the actual bumping position A2. Since the actual bumping position A2 is varied due to individual differences of the turbo supercharger 60, it is preferable that the virtually full-closed target opening degree A1 is virtually set so as to be the position nearer to the closing side than the bumping position in any type of the turbo supercharger 60. Thus, it is possible to cause the main arm 83 to inevitably bump into the stopper 86 without influence from the individual differences of the turbo supercharger 60 when the variable nozzle 63 is driven to the closing side. The closing side is the side towards the virtually full-closed target opening degree A1.

The drive motor 61 may be driven to the closing side until the main arm 83 reaches the bumping position without specific setting of the virtually full-closed target opening degree A1.

In the vertical axis of FIG. 4A, the opening degree becomes smaller toward the upper side. The target speed V2 of FIG. 4B is a target speed to which the closing speed is lowered. The target speed V2 is set to slow speed resulting relatively small impact which does not cause abrasion, deformation, or the like even when the main arm 83 bumps into the stopper 86 at the speed of V2.

As shown in FIG. 4A, the opening degree of the variable nozzle 63 is larger than the predetermined opening degree A3 during a period prior to time t1. Thus the control means 50, when forcing the variable nozzle 63 to the closing side, controls duty or current to the drive motor 61 in the feedback control process according to the deviations in the opening degrees at Step S18B of FIG. 3 (see FIG. 4C). Therefore, the feedback control process is performed at the response speed same as the conventional transient response speed during the period prior to time t1.

As shown in FIG. 4A, the opening degree of the variable nozzle 63 is less than or equal to the predetermined opening degree A3 during a period from time t1 to time t2. Thus the control means 50, when forcing the variable nozzle 63 to the closing side, controls duty or current to the drive motor 61 such that the closing speed becomes the constant target speed V2 at Step S18A of FIG. 3 (see FIG. 4B). The closing speed can be maintained constant by obtaining the opening degree of the variable nozzle 63 for every predetermined time and performing the feedback control on duty or current to the drive motor 61 to keep a variation of the opening degree with respect to time constant (see FIG. 4C).

As shown in FIG. 4A, the opening degree of the variable nozzle 63 reaches the bumping position A2 during a period after time t2. Thus the control means 50 determines that the main arm 83 is located on the bumping position at Step S20 of FIG. 3, and stops the output of duty or current to the drive motor 61 at Step S22 of FIG. 3 (see FIG. 4C). Therefore, the opening degree of the variable nozzle 63 is kept at the bumping position A2.

As described above, the conventional feed control process is used to force the variable nozzle 63 to the closing side until the opening degree of the variable nozzle 63 reaches the predetermined opening degree A3. Thus, it is possible to suppress the degradation of transient response.

When the opening degree of the variable nozzle 63 becomes less than or equal to the predetermined opening degree A3, the variable nozzle 63 is forced to the closing side toward the virtually full-closed target opening degree A1 until it reaches the bumping position A2. Therefore it is possible to reliably close the variable nozzle 63 to the bumping position, and to raise the temperature of the exhaust gas more effectively.

When the opening degree of the variable nozzle 63 becomes less than or equal to the predetermined opening degree A3, the closing speed is controlled to the target speed V2 (constant) which is slower closing speed. Thus it is possible to suppress the impact when the member interlocking with the variable nozzle 63 bumps into the stopper 86. Therefore, the variable nozzle 63 is movable to the bumping position more safely.

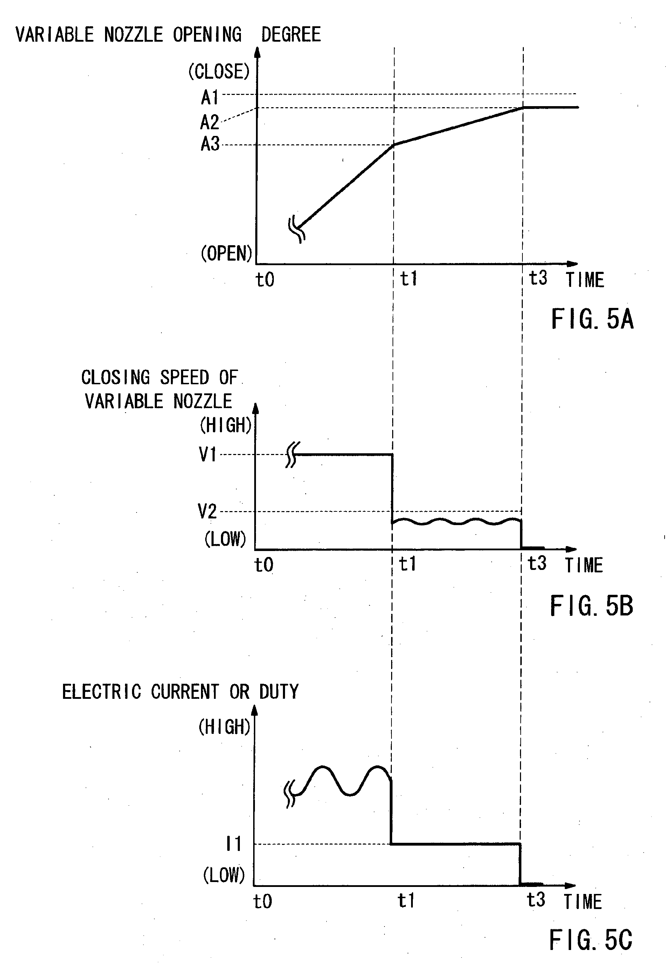

The second example, in which the current to the drive motor 61 is maintained constant, will be described in reference to FIGS. 5A to 5C. FIG. 5C shows a magnitude of current in the case where duty or current to the drive motor 61 (current in this case) is adjusted to a certain predetermined value such that the closing speed of the variable nozzle 63 becomes less than or equal to a target speed in Step S18A of FIG. 3.

FIG. 5A shows the opening degree of the variable nozzle 63 with respect to time. FIG. 5B shows the closing speed of the variable nozzle 63 with respect to time. FIG. 5C shows a magnitude of output of duty or current to the drive motor 61 from the control means 50 with respect to time.

The predetermined opening degree A3, the bumping position A2, the virtually full-closed target opening degree A1, shown in FIG. 5A, are same as defined in FIG. 4A.

The target speed V2 in FIG. 5B is same as the target speed V2 described in FIG. 4B. The target speed V2 is set to slow speed causing relatively small impact which does not cause abrasion, deformation or the like even when the main arm 83 bumps into the stopper 86 at the speed of V2.

As shown in FIG. 5A, the opening degree of the variable nozzle 63 is larger than the predetermined opening degree A3 until time t1. Thus the control means 50, when forcing the variable nozzle 63 to the closing side, controls duty or current to the drive motor 61 in the feedback control process according to the deviations in the opening degrees at Step S18B of FIG. 3 (see FIG. 5C). Therefore, the feedback control process is performed at the response speed same as the conventional transient response speed until time t1.

As shown in FIG. 5A, the opening degree of the variable nozzle 63 is less than or equal to the predetermined opening degree A3 during a period from time t1 to time t3. Thus the control means 50, when forcing the variable nozzle 63 to the closing side, controls duty or current to the drive motor 61 to a constant predetermined value I1 (see FIG. 5C) such that the closing speed becomes slow, i.e., less than or equal to the target speed V2 at Step S18A of FIG. 3 (see FIG. 5B) with a little deviation.

When duty or current is maintained at the predetermined value I1, as shown in FIG. 5B, there is a possibility that the closing speed of the variable nozzle 63 cannot be maintained constant as in FIG. 4B. However, the predetermined value I1 is set such that the closing speed becomes less than or equal to the target speed V2 in consideration of margin or the like in advance.

As shown in FIG. 5A, the opening degree of the variable nozzle 63 reaches the bumping position A2 after time t3. Thus the control means 50 determines that the main arm is located on the bumping position at Step S20 of FIG. 3, and stops the output of duty or current to the drive motor 61 at Step S22 of FIG. 3 (see FIG. 5C). Therefore, the opening degree of the variable nozzle 63 is kept at the bumping position A2.

As described above, the conventional feed control process is used to force the variable nozzle 63 to the closing side until the opening degree of the variable nozzle 63 reaches the predetermined opening degree A3. Thus, it is possible to suppress the degradation of transient response.

When the opening degree of the variable nozzle 63 becomes less than or equal to the predetermined opening degree A3, the variable nozzle 63 is forced to the closing side until it reaches the bumping position A2. Therefore it is possible to securely move the variable nozzle 63 to the bumping position, and to raise the temperature of the exhaust gas more effectively.

When the opening degree of the variable nozzle 63 becomes less than or equal to the predetermined opening degree A3, duty or current to the drive motor 61 is simply controlled at the predetermined value I1 such that the closing speed is less than or equal to the target speed V2. Therefore it is possible to securely move the variable nozzle 63 to the bumping position, and to raise the temperature of the exhaust gas more effectively.

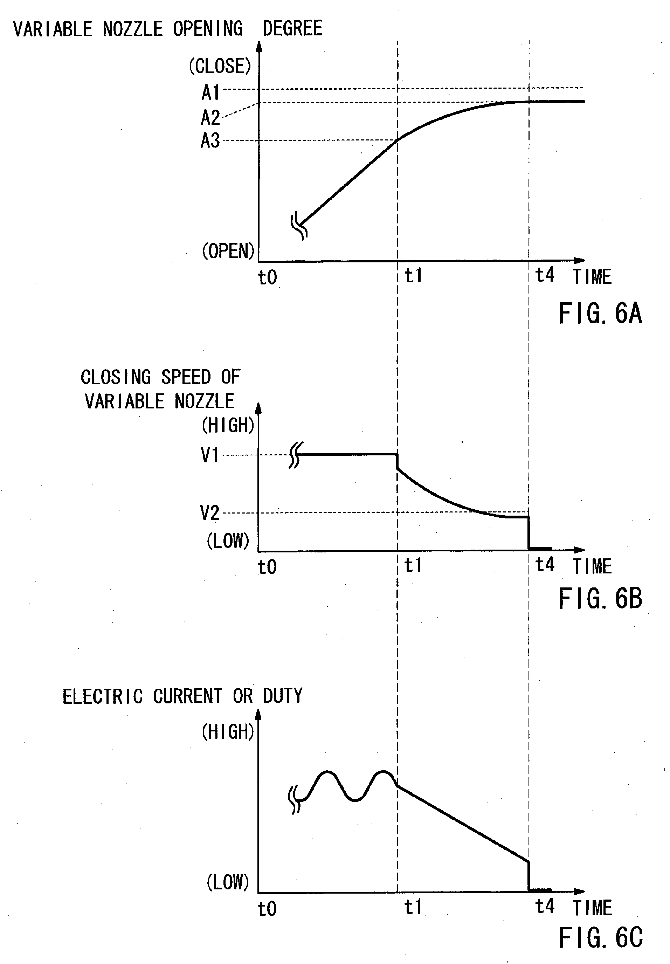

The last example, in which the current to the drive motor 61 is gradually decreased, will be described in reference to FIGS. 6A to 6C. FIG. 6C shows a magnitude of current in the case where duty or current to the drive motor 61 (current in this case) is controlled to be gradually decreased such that the closing speed of the variable nozzle 63 becomes less than or equal to a target speed when it reaches the bumping position in Step S 18A of the flowchart in FIG. 3.

FIG. 6A shows the opening degree of the variable nozzle 63 with respect to time. FIG. 6B shows the closing speed of the variable nozzle 63 with respect to time. FIG. 6C shows a magnitude of output of duty or current to the drive motor 61 from the control means 50 with respect to time.

The predetermined opening degree A3, the bumping position A2, the virtually full-closed target opening degree A1, shown in FIG. 6A, are same as defined in FIG. 4A.

The target speed V2 in FIG. 6B is same as the target speed V2 described in FIG. 4B. The target speed V2 is set to slow speed causing relatively small impact which does not cause abrasion, deformation or the like even when the main arm 83 bumps into the stopper 86 at the speed of V2.

As shown in FIG. 6A, the opening degree of the variable nozzle 63 is larger than the predetermined opening degree A3 until time t1. Thus the control means 50, when controlling the variable nozzle 63 to the closing side, controls duty or current to the drive motor 61 in the feedback control process according to the deviations in the opening degrees at Step S18B of FIG. 3 (see FIG. 6C). Therefore, the feedback control process is performed at the response speed same as the conventional transient response speed until time t1.

As shown in FIG. 6A, the opening degree of the variable nozzle 63 is less than or equal to the predetermined opening degree A3 (in the drawing equal to or upper than A3) during a period from time t1 to time t4. Thus the control means 50, when forcing the variable nozzle 63 to the closing side, gradually decreases duty or current to the drive motor 61 (see FIG. 6C) such that the closing speed is gradually decreased at Step S18A of FIG. 3 (see FIG. 6B). A decreasing amount of duty or current is set in consideration of margin or the like in advance, such that the closing speed becomes less than or equal to the target speed V2 when the opening degree of the variable nozzle 63 reaches the bumping position A2 (the closing speed becomes less than or equal to the target speed V2 at the time t4) by gradually decreasing the closing speed.

As shown in FIG. 6A, the opening degree of the variable nozzle 63 reaches the bumping position A2 after time t4. Thus the control means 50 determines that the main arm is located on the bumping position at Step S20 of FIG. 3, and stops the output of duty or current to the drive motor 61 at Step S22 of FIG. 3 (see FIG. 6C). Therefore, the opening degree of the variable nozzle 63 is kept at the bumping position A2.

As described above, the conventional feed control process is used to control the variable nozzle 63 to the closing side until the opening degree of the variable nozzle 63 reaches the predetermined opening degree A3. Thus, it is possible to suppress the degradation of transient response.

When the opening degree of the variable nozzle 63 becomes less than or equal to the predetermined opening degree A3, the variable nozzle 63 is forced to the closing side until it reaches the bumping position A2. Therefore it is possible to reliably close the variable nozzle 63 to the bumping position, and to raise the temperature of the exhaust gas more effectively.

When the opening degree of the variable nozzle 63 becomes less than or equal to the predetermined opening degree A3, the closing speed of the variable nozzle 63 is gradually decreased. Duty or current to the drive motor 61 is gradually decreased such that the closing speed of the variable nozzle 63, when the member interlocking with the variable nozzle 63 bumps into the stopper 86, becomes less than or equal to the target speed V2. Thus it is possible to suppress the impact when the member interlocking with the variable nozzle 63 bumps into the stopper 86. In this way, the variable nozzle 63 is movable to the bumping position more safely.

While the embodiments of invention have been described with reference to specific configurations, it will be apparent to those skilled in the art that many alternatives, modifications and variations may be made without departing from the scope of the present invention. Accordingly, embodiments of the present invention are intended to embrace all such alternatives, modifications and variations that may fall within the spirit and scope of the appended claims. For example, embodiments of the present invention should not be limited to the representative configurations, but may be modified, for example, as described below.

The method for controlling the internal-combustion engine provided with the turbo supercharger having the variable nozzles, according to present invention, should not be unduly limited to the processes, operations or the like described in the embodiments set forth hereinabove.

The various catalysts and filters, or the like provided in the exhaust gas line 70 should not be unduly limited to the catalysts and filters, or the like described in the embodiments set forth hereinabove.

The structure of the bumping position (the stopper 86 and the main arm 83) should not be unduly limited to the structure described in the embodiments set forth hereinabove.

The terms of "greater than or equal to (≥)", "less than or equal to (≤)", "greater than (>)", "less than (<)" may be used. "Greater than or equal to (≥)" and "less than or equal to (≤)" may optionally include an equal sign below the signs written herein or as otherwise commonly seen.

The values used in the embodiments are illustrative only, thus it should not be unduly limited to these values.

The stopper 86 may be provided at a position at which the main arm 83 bumps thereto, or at a position at which the other member interlocking with the variable nozzle 63 bumps thereto. For example, the stopper 86 may be located at a position at which the stopper contacts with the variable nozzle 63, the annular member 82, the second arm 84 and the first arm 85.

As shown in FIG. 4B, the closing speed of the variable nozzle 63 may be constantly kept at V2, or may be gradually decreased from V1 to V2.

Certain embodiments include a method for controlling an internal-combustion engine (10). The engine (10) is provided with a turbo supercharger having a variable nozzle (63). The method may comprise one or more of steps. The first step is forcing the nozzle (63) to a closing side by a controller (50), so that an exhaust gas temperature of the engine (10) is raised. The second step is decreasing a closing speed of the nozzle (63) by the controller (50), when an opening degree of the nozzle (63) is less than or equal to a predetermined opening degree. In the second step, the closing speed becomes lower than a closing speed of the nozzle (63) during a period until the opening degree reaches the predetermined opening degree. The third step is moving the nozzle (63) to a closing side until a mechanical limit position by the controller (50).

## Claims

1. A method for controlling an internal-combustion engine (10) provided with a turbo supercharger having a variable nozzle (63), the method comprising the steps of:
forcing the variable nozzle (63) to a closing side by a controller (50) or control means (50) so that an exhaust gas temperature of the internal-combustion engine (10) is raised;
decreasing a closing speed of the variable nozzle (63) by the controller (50) or control means (50), when an opening degree of the variable nozzle (63) is less than or equal to a predetermined opening degree, such that the closing speed becomes lower than a closing speed of the variable nozzle (63) during a period until the opening degree reaches the predetermined opening degree; and
moving the variable nozzle (63) to a closing side until a mechanical limit position by the controller (50) or control means (50).

2. The method for controlling an internal-combustion engine (10) of claim 1, wherein the variable nozzle (63) is opened and/or closed by a drive motor (61), a magnitude of current to the drive motor (61) is adjusted by the controller (50) or control means (50) such that the closing speed of the variable nozzle (63) from the predetermined opening degree to the mechanical limit position becomes a target speed that is less than the closing speed of the variable nozzle (63) during a period until the opening degree reaches the predetermined opening degree.

3. The method for controlling an internal-combustion engine (10) of claim 1, wherein the variable nozzle (63) is opened and/or closed by a drive motor (61), a magnitude of current to the drive motor (61) is adjusted to a constant predetermined value by the controller (50) or control means (50) such that the closing speed of the variable nozzle (63) from the predetermined opening degree to the mechanical limit position becomes less than or equal to a target speed that is less than the closing speed of the variable nozzle (63) during a period until the opening degree reaches the predetermined opening degree.

4. The method for controlling an internal-combustion engine (10) of claim 1, wherein the variable nozzle (63) is opened and/or closed by a drive motor (61), a current to the drive motor (61) is gradually decreased by the controller (50) or control means (50) such that the closing speed of the variable nozzle (63) is gradually decreased during a period from the predetermined opening degree to the mechanical limit position, and when the variable nozzle (63) reaches the mechanical limit position, the closing speed of the variable nozzle (63) becomes less than or equal to a target speed that is less than the closing speed during a period until the opening degree reaches the predetermined opening degree.

## Patentansprüche

1. Verfahren zum Steuern einer Brennkraftmaschine (10), bei dem ein Abgasturbolader vorgesehen ist, der eine variable Düse (63) hat, wobei das Verfahren folgende Schritte aufweist:
Treiben der variablen Düse (63) durch ein Steuergerät (50) oder eine Steuereinrichtung (50) zu einer schließenden Seite hin, sodass eine Abgastemperatur der Brennkraftmaschine (10) erhöht wird;
Verringern einer Schließgeschwindigkeit der variablen Düse (63) durch das Steuergerät (50) oder die Steuereinrichtung (50), wenn ein Öffnungsgrad der variablen Düse (63) kleiner als oder gleich einem vorgegebenen Öffnungsgrad ist, sodass die Schließgeschwindigkeit niedriger wird als eine Schließgeschwindigkeit der variablen Düse (63) während einer Zeitspanne, bis der Öffnungsgrad den vorgegebenen Öffnungsgrad erreicht; und
Bewegen der variablen Düse (63) durch das Steuergerät (50) oder die Steuereinrichtung (50) zu einer schließenden Seite hin, bis zu einer mechanischen Endlage.

2. Verfahren zum Steuern einer Brennkraftmaschine (10) nach Anspruch 1, wobei die variable Düse (63) durch einen Antriebsmotor (61) geöffnet und/oder geschlossen werden kann, wobei eine Stromstärke für den Antriebsmotor (61) durch das Steuergerät (50) oder die Steuereinrichtung (50) so eingestellt wird, dass die Schließgeschwindigkeit der variablen Düse (63) von dem vorgegebenen Öffnungsgrad zu der mechanischen Endlage zu einer Sollgeschwindigkeit wird, die kleiner als die Schließgeschwindigkeit der variablen Düse (63) während einer Zeitspanne ist, bis der Öffnungsgrad den vorgegebenen Öffnungsgrad erreicht.

3. Verfahren zum Steuern einer Brennkraftmaschine (10) nach Anspruch 1, wobei die variable Düse (63) durch einen Antriebsmotor (61) geöffnet und/oder geschlossen werden kann, wobei eine Stromstärke für den Antriebsmotor durch das Steuergerät (50) oder die Steuereinrichtung (50) so auf einen konstant vorgegebenen Wert eingestellt wird, dass die Schließgeschwindigkeit der variablen Düse (63) von dem vorgegebenen Öffnungsgrad zu der mechanischen Endlage kleiner als oder gleich einer Sollgeschwindigkeit wird, die kleiner als die Schließgeschwindigkeit der variablen Düse (63) während einer Zeitspanne ist, bis der Öffnungsgrad den vorgegebenen Öffnungsgrad erreicht.

4. Verfahren zum Steuern einer Brennkraftmaschine (10) nach Anspruch 1, wobei die variable Düse (63) durch einen Antriebsmotor (61) geöffnet und/oder geschlossen werden kann, wobei ein Strom für den Antriebsmotor (61) durch das Steuergerät (50) oder die Steuereinrichtung (50) allmählich so verringert wird, dass die Schließgeschwindigkeit der variablen Düse (63) während einer Zeitspanne von dem vorgegebenen Öffnungsgrad zu der mechanischen Endlage allmählich verringert wird, und wenn die variable Düse (63) die mechanische Endlage erreicht, die Schließgeschwindigkeit der variablen Düse (63) kleiner als oder gleich einer Sollgeschwindigkeit wird, die kleiner als die Schließgeschwindigkeit während einer Zeitspanne ist, bis der Öffnungsgrad den vorgegebenen Öffnungsgrad erreicht.

## Revendications

1. Procédé permettant de commander un moteur à combustion interne (10) pourvu d'un turbocompresseur ayant une buse variable (63), le procédé comprenant les étapes qui consistent :
à forcer la buse variable (63) vers un côté de fermeture par un dispositif de commande (50) ou par un moyen de commande (50) de sorte qu'une température de gaz d'échappement du moteur à combustion interne (10) soit augmentée ;
à diminuer une vitesse de fermeture de la buse variable (63) par le dispositif de commande (50) ou par le moyen de commande (50), lorsqu'un degré d'ouverture de la buse variable (63) est inférieur ou égal à un degré d'ouverture prédéterminé, de sorte que la vitesse de fermeture devienne inférieure à une vitesse de fermeture de la buse variable (63) pendant une période jusqu'à ce que le degré d'ouverture atteigne le degré d'ouverture prédéterminé ; et
à déplacer la buse variable (63) vers un côté de fermeture jusqu'à une position limite mécanique par le dispositif de commande (50) ou par le moyen de commande (50).

2. Procédé permettant de commander un moteur à combustion interne (10) de la revendication 1, dans lequel la buse variable (63) est ouverte et/ou fermée par un moteur d'entraînement (61), une amplitude de courant au moteur d'entraînement (61) est réglée par le dispositif de commande (50) ou par le moyen de commande (50) de sorte que la vitesse de fermeture de la buse variable (63) du degré d'ouverture prédéterminé à la position limite mécanique devienne une vitesse cible qui est inférieure à la vitesse de fermeture de la buse variable (63) pendant une période jusqu'à ce que le degré d'ouverture atteigne le degré d'ouverture prédéterminé.

3. Procédé permettant de commander un moteur à combustion interne (10) de la revendication 1, dans lequel la buse variable (63) est ouverte et/ou fermée par un moteur d'entraînement (61), une amplitude de courant au moteur d'entraînement (61) est réglée à une valeur constante prédéterminée par le dispositif de commande (50) ou par le moyen de commande (50) de sorte que la vitesse de fermeture de la buse variable (63) du degré d'ouverture prédéterminé à la position limite mécanique devienne inférieure ou égale à une vitesse cible qui est inférieure à la vitesse de fermeture de la buse variable (63) pendant une période jusqu'à ce que le degré d'ouverture atteigne le degré d'ouverture prédéterminé.

4. Procédé permettant de commander un moteur à combustion interne (10) de la revendication 1, dans lequel la buse variable (63) est ouverte et/ou fermée par un moteur d'entraînement (61), un courant au moteur d'entraînement (61) est progressivement diminué par le dispositif de commande (50) ou par le moyen de commande (50) de sorte que la vitesse de fermeture de la buse variable (63) soit progressivement diminuée pendant une période du degré d'ouverture prédéterminé à la position limite mécanique, et lorsque la buse variable (63) atteint la position limite mécanique, la vitesse de fermeture de la buse variable (63) devient inférieure ou égale à une vitesse cible qui est inférieure à la vitesse de fermeture pendant une période jusqu'à ce que le degré d'ouverture atteigne le degré d'ouverture prédéterminé.
